# EUROPÄISCHE PATENTANMELDUNG

(11) **EP 2 290 772 A1**
(43) Veröffentlichungstag der Anmeldung: **02.03.2011**
(21) Anmeldenummer: 10174442.3
(22) Anmeldetag: 29.08.2010
(51) Int. Cl.: H02G 3/30, A47B 96/06, F16L 3/24

(54) **Ausleger**

(30) Priorität: 01.09.2009 CH 13562009
(71) Anmelder: ZURECON AG, 8003 Zürich (CH)
(72) Erfinder: Pfluger, Gerd, CH-4625, Oberbuchsiten (CH)
(74) Vertreter: Rutz & Partner

(57) **Zusammenfassung**

Der Ausleger (1) weist einen Tragarm (11) mit einem Mittelstück (111) und einem ersten sowie einem zweiten in dieselbe Richtung senkrecht zum Mittelstück (111) geneigten Seitenstück (112) auf, die ein U-Profil bilden, welches mit einem Montageteil (12) verbunden oder lösbar verbindbar ist, das ein an einer vertikal ausgerichteten Stütze (2) montierbares Mittelteil (121) und ein erstes sowie ein zweites senkrecht dazu gegen den Tragarm (11) gerichtetes Seitenteil (122A, 122B) aufweist. Erfindungsgemäss weist jedes Seitenteil (122A, 122B) ein Fusselement (1221) auf, welches sich zumindest über einen Teil der Länge des Tragarms (11) erstreckt und an der Unterseite des Mittelstücks (111) und am zugehörigen Seitenstück (112) des Tragarms (11) anliegt und dass Teile des Tragarms (11) und des Montageteils (12) formschlüssig miteinander verbunden sind, so dass der Tragarm (11) auf den Fusselementen (1221) gehalten ist.

## Beschreibung

Die Erfindung betrifft einen zur Montage an einer Stütze, beispielsweise einer Deckenstütze, vorgesehenen Ausleger nach dem Oberbegriff des Patentanspruchs 1.

Gattungsgemässe Ausleger werden z.B. in der Installationstechnik verwendet und dienen dem Tragen von Lasten, wie Wasserrohren, elektrischen Leitungen oder Stromschienen. Als Montageprofile dienen üblicherweise Deckenstützen, an denen einseitig oder auf einander gegenüberliegenden Seiten wenigstens ein Ausleger montiert wird.

Aus [1], EP 1 155 638 A1, ist ein gattungsgemässer Ausleger bekannt, der nachstehend in den Figuren 1, 2 und 3 exemplarisch gezeigt ist. Der Ausleger ist lösbar an einer Deckenstütze montierbar, die dazu mit verschiedenartigen Montageöffnungen versehen ist. Der Ausleger besteht aus einem der Aufnahme der Last dienenden Tragarm und einem damit verbundenen Montageteil, das ebenfalls eine Montageöffnung aufweist. Die lösbare Montage des Auslegers erfolgt anhand von Verbindungselementen, wie Schrauben oder Haken, die in die Montageöffnungen eingeführt werden. Der Ausleger kann daher an der Deckenstütze in wählbarer Höhe sowie, je nach dem Profil der Deckenstütze (z.B. Vierkant-Hohlprofil oder sogenanntes C-Profil), in eine wählbare Richtung weisend, montiert werden.

Nachteilig bei den bekannten Auslegern ist, dass deren Herstellung einen erheblichen Aufwand verursacht.

Der Tragarm wird nämlich an das zugehörige Montageteil angeschweisst, was nicht nur ausserordentlich aufwändig ist, sondern auch verschiedene weitere Nachteile nach sich zieht. Einerseits ist zu beachten, dass die Ausleger oft sehr hohe Lasten tragen und daher starken mechanischen Belastungen ausgesetzt sind. Mangelhafte Schweissstellen können dabei bereits kurz nach der Installation des Auslegers aufreissen, wonach die Last nicht mehr gehalten ist.

Fehlerhafte Schweissstellen können auf verschiedene Ursachen zurückgeführt werden. Bei zu grossem Schweissstrom oder zu langem Lichtbogen können Einbrandkerben entstehen. Bei zu geringer Schweissstromstärke und zu hoher Schweissgeschwindigkeit können Schlackeneinschüsse resultieren. Bei unsauberer Werkstückoberfläche (Rost, Fett, Beschichtungen) entstehen Gaseinschlüsse (Poren). Bei zu schnellem Entfernen der Elektrode von der Schmelze können Endkrater entstehen, die Schrumpfrisse nach sich ziehen. Werkstoffmängel und zu schnelles Abkühlen nach dem Schweissen können zu Rissen im Schweissnahtübergang führen. Beim Eindringen der Schlacke in den Wurzelbereich resultieren Wurzelfehler. Ferner kann die Schweissnaht auch ästhetisch unbefriedigend sein.

Besonders nachteilig sind ferner Materialschäden, die durch das Schweissen hervorgerufen werden und die eine relativ teure Nachbehandlung erfordern. Bei der Verwendung von verzinktem Metall wird durch das Schweissen nämlich die Schutzschicht aus Zink in einem weiten Bereich zerstört, weshalb eine teure Nachbehandlung erforderlich ist. Materialien, die beispielsweise nach dem Sendzimir-Verfahren bearbeitet wurden, weisen nach dem Schweissen daher Mängel in den kritischsten auf, in denen die Last einwirkt. Sofern diese Mängel nicht behoben werden, ist nach einer relativ kurzen Betriebsdauer mit Oxidationsschäden zu rechnen, welche die Tragfähigkeit der Ausleger stark beeinträchtigen.

Die Verwendung von Rohmaterial, das mit dem nachstehend beschriebenen Sendzimir-Verfahren bearbeitet wurde, ergibt daher noch keinen genügenden Oxidationsschutz. Beim Sendzimir-Verfahren wird ein Stahlband bei Temperaturen von ca. 460°C unter Schutzgas schräg in ein Zinkbad eingeführt. Beim Austritt des Stahlbandes aus der Zinkwanne wird überflüssiger Zink mittels breiten Luftdüsen vom Blech abgestreift, so dass eine definierte Zinkdicke auf dem Blech verbleibt. Im Anschluss wird das Blech nachgewalzt und chemisch behandelt.

Da Zink unedler ist als Stahl, "opfert" sich die Zinkschicht beim praktischen Einsatz der gefertigten Produkte zum Schutz des Stahls. Selbst bei Verletzungen der Zinkschicht (z.B. beim Schneiden, Bohren, etc.) "fliesst" der Zink elektrolytisch wieder über den Stahl. Das funktioniert bis zu einer Schichtdicke von 2 mm. Deshalb erfordern Schnittkanten keine Nachbehandlung. Erst nach dem Verbrauch der Zinkschicht beginnt der Stahl zu oxidieren. Damit die Zinkschicht nicht vorzeitig oxidiert und ihre Schutzwirkung verliert, ist sie durch einen Oberflächenschutz, wie Polyester, vor Umwelteinflüssen geschützt.

Während die Bearbeitung durch Schneiden und Bohren somit zu Schäden führt, die automatisch geheilt werden, resultieren nach dem Schweissen Sendzimir-verzinkter Materialien nicht tolerierbare Schäden, die eine Nachbehandlung im Zinkbad erfordern.

Aus [2], US 2,933,196, ist eine Regalvorrichtung bekannt, die eine vertikal montierte Montageschiene aufweist, an der Ausleger montierbar sind, die aus einem der Aufnahme der Last dienenden Tragarm und einem damit verbundenen Montageteil bestehen, die ebenfalls miteinander verschweisst werden. Der in [2] offenbarte Gegenstand weist daher dieselben Nachteile auf, wie der Gegenstand von [1].

Aus [3], EP 1 475 871 A1, ist eine Trägereinheit zum Halten von Kabelträgersystemen bekannt, der einen Tragarm mit einer Stützfläche sowie ein Paar von Seitenwänden aufweist, die an einem Ende mindestens ein Paar von gegenüberliegenden Befestigungslöchern aufweisen, die dazu bestimmt sind, Verriegelungsmittel zum Verriegeln des Tragarms aufzunehmen. Die Trägereinheit umfasst ferner ein Montageteil mit einer Grundfläche, die an einer vertikalen tragenden Struktur verankert wird, und einem Paar von Seitenwänden, die quer zur Grundfläche angeordnet sind und zugehörige gegenüberliegende Befestigungslöcher zum Eingriff durch die Verriegelungsmittel aufweisen.

Bei dieser Lösung werden der Tragarm und das Montageteil somit nicht miteinander verschweisst sondern durch Verriegelungsmitteln miteinander verbunden, die zusätzlich vorgesehenen und montiert werden müssen. Die Verriegelungsmittel umfassen eine Stange, die in die zueinander korrespondierenden Öffnungen im Tragarm und im Montageteil eingeführt und beidseitig mittels Blattfedern fixiert wird. Die Verwendung der Verriegelungsmittel führt daher zu einem zusätzlichen Aufwand bei der Herstellung und Montage der Tragvorrichtung. Sofern die Blattfedern nicht korrekt montiert werden, oder gegebenenfalls durch Witterungseinflüsse Schaden nehmen, resultieren bei dieser Lösung nicht nur ein unerwünschter Mehraufwand am Installationsort, sondern auch Sicherheitsrisiken.

Der vorliegenden Erfindung liegt daher die Aufgabe zugrunde, einen verbesserten Ausleger zu schaffen, der mit geringerem Aufwand in optimaler Qualität hergestellt werden kann.

Dabei sollen Materialien nach Wahl des Herstellers eingesetzt werden können, ohne dass diese während des Fertigungsprozesses beeinträchtigt werden. Insbesondere sollen Sendzimir-verzinkte und rostfreie Materialien eingesetzt werden können. Der gefertigte Ausleger soll zudem keine teure Nachbehandlung erfordern.

Ferner soll auf die Verwendung von lösbaren Verbindungsmitteln verzichtet werden, die vom Installateur bei der Installation der Ausleger montiert werden.

Diese Aufgaben werden mit einem Ausleger gelöst, welcher die in Anspruch 1 angegebenen Merkmale aufweist. Vorteilhafte Ausgestaltungen der Erfindung sind in weiteren Ansprüchen angegeben.

Der Ausleger weist einen Tragarm mit einem Mittelstück und einem ersten sowie einem zweiten in dieselbe Richtung senkrecht zum Mittelstück geneigten Seitenstück auf, die ein U-Profil bilden, welches mit einem Montageteil verbunden oder lösbar verbindbar ist, das ein an einer vertikal ausgerichteten Stütze montierbares Mittelteil und ein erstes sowie ein zweites senkrecht dazu gegen den Tragarm gerichtetes Seitenteil aufweist.

Erfindungsgemäss weist jedes Seitenteil ein Fusselement auf, welches sich zumindest über einen Teil der Länge des Tragarms erstreckt und an der Unterseite des Mittelstücks und am zugehörigen Seitenstück des Tragarms anliegt und dass Teile des Tragarms und des Montageteils formschlüssig miteinander verbunden sind, so dass der Tragarm auf den Fusselementen gehalten ist.

Die Fusselemente sind unterhalb des Mittelstücks des Tragarms je an einer Innenseite eines Seitenstücks des Tragarms gehalten. Auf diese Weise wird die untere Hälfte des Montageteils innerhalb des Tragarms gehalten und tritt somit nicht störend in Erscheinung. Das Montageteil und der Tragarm bilden optisch eine Einheit, was durch entsprechende Einformungen noch unterstützt werden kann. Die Fusselemente liegen direkt am Mittelstück des Tragarms an und stützen diesen. Durch die formschlüssige Verbindung zwischen dem Tragarm und dem Montageteil, anstelle einer Schweissverbindung oder einer Verbindung mit zusätzlichen Verriegelungsmitteln, wird verhindert, dass der Tragarm unter Last nach unten kippen kann.

Durch Rippen, die vorzugsweise in das Mittelstück eingeformt werden, können die Fusselemente unter Last zudem präzise in Position gehalten werden.

Nach der Montage sind die Seitenteile des Montageteils mit den Fusselementen senkrecht zum Mittelstück des Tragarms und somit senkrecht zur einwirkenden Last ausgerichtet, weshalb sie eine relativ grosse Last aufnehmen können. Die Seitenstücke des Tragarms, welcher als Lastaufnehmer dient und ein nach unten geöffnetes U-Profil aufweist, liegen parallel an den Fusselementen an. Die Fusselemente erstrecken sich über einen Teil oder die gesamte Länge des Tragarms und werden entsprechend der maximal zu tragenden Last, einschliesslich eines Sicherheitsfaktors, dimensioniert.

Zur Fertigung des Tragarms und des Montageteils kann kostengünstiges verzinktes Blech, z.B. Sendzimir-verzinktes Blech, verwendet werden, welches gegen Oxidation optimal geschützt ist und dem erfindungsgemässen Ausleger dieselben Eigenschaften verleiht. Besonders wesentlich ist, dass keine speziellen Arbeitsgänge für die Verzinkung der gefertigten Ausleger erforderlich sind. Insbesondere entfallen Transporte zu externen Verzinkereien, in denen die geschweissten Produkte mit hohem Aufwand einzelstückweise verzinkt werden. Anstelle der Durchführung einer Sonderbehandlung, kann Material verwendet werden, welches in hohen Mengen und mit relativ geringen Kosten gefertigt wird. Die Kostenreduktion durch die Verwendung von verzinktem Rohmaterial, z.B. Sendzimirverzinktem Blech, im Vergleich zur individuellen Verzinkung der gefertigten Ausleger ist erheblich. Zu beachten ist ferner die Reduktion der Lagerkosten sowie der Lieferzeiten. Nach Eingang einer Bestellung können die bestellten Ausleger sofort fertig gestellt und ausgeliefert werden. Konventionelle Ausleger müssen hingegen vorgefertigt, in externen Betrieben verzinkt und in genügend hoher Anzahl gelagert werden, damit kein Lieferverzug auftritt.

In der prinzipiellen Ausgestaltung sind der Tragarm und das Montageteil ineinander verschoben und auf eine passende Art miteinander verbunden. Dabei kann auf das mit Problemen behaftete Verschweissen des Tragarms und des Montageteils verzichtet werden. Da die Last durch die Fusselemente getragen wird, ist lediglich eine gegenseitige Fixierung des Tragarms und des Montageteils erforderlich. Eine Lastaufnahme durch die resultierenden Verbindungen ist dabei nicht erforderlich.

Da die Verbindungsstellen an zwei parallel aneinander liegenden plattenförmigen Elementen, nämlich den Fusselementen des Montageteils, alternativ oder zusätzlich am Mittelteil des Montageteils, und den Seitenstücken des Tragarms, vorgenommen werden, sind verschiedene Verbindungsarten vorteilhaft einsetzbar, bei denen die Probleme des Schweissen nicht auftreten.

Besonders einfach können Halteelemente am Montageteil vorgesehen werden, welche den Tragarm am zugewandten Ende halten und verhindern, dass dieser unter Last vorne nach unten kippen kann. Der Tragarm wird daher durch die Fusselemente des Montageteils gehalten und durch die auf den Tragarm einwirkende Last gegen den durch die Halteelemente gebildeten Anschlag am Montageteil gedreht.

Die Halteelemente können in einfacher Weise, vorzugsweise gleichzeitig mit dem Ausstanzen des Montageteils in dieses eingeformt oder aus diesem ausgeschnitten werden. Vorzugsweise werden zungenförmige Halteelemente ausgeschnitten und nach aussen gedrückt, so dass die freigelegten Seitenstücke des Tragarms zwischen die Halteelemente und die Seitenteile und/oder das Mittelteil des Montageelements eingefahren werden können.

In einer weiteren vorzugsweisen Ausgestaltung werden Halteelemente in der Form von Ausnehmungen an den Seitenteilen des Montageteils vorgesehen, in die das Mittelteil des Tragarms eingreifen kann. Vorzugsweise sind L-förmige Ausnehmungen vorgesehen, in die das L-förmige Endstück des Mittelteils des Tragarms eingreifen kann.

Auf einfache Weise wird somit eine zuverlässige Verbindung zwischen dem Montageteil und dem Tragarm realisiert. Auf Schweissen oder die Verwendung von weiteren Verbindungselementen kann vollständig verzichtet werden.

Grundsätzlich sind auch weitere oder ergänzende Möglichkeiten der Verbindung realisierbar. Beispielsweise sind Verbindungen mit Schrauben, Nieten oder Tox-Verbindungen realisierbar. Tox-Verbindungen, die schnell eingearbeitet werden können, sind den Fachmann beispielsweise aus den Publikationen der TOX® PRESSOTECHNIK GmbH & Co. KG, D-88250 Weingarten bekannt. Auch bei diesen mit zusätzlichem Aufwand verbundenen Verbindungsarten kann auf das Schweissen vollständig verzichtet werden.

Die geringen Verletzungen der Zinkschicht, die beim Biegen und Verbinden des Rohmaterials bei einer dieser Verbindungsarten resultieren, werden automatisch geheilt, da die Zinkschicht wieder über die verletzten Materialstellen fliesst. Die Erfindung erlaubt es daher, den Tragarm und das Montageteil aus verzinktem Material zu fertigen, ohne dass nach der Verbindung dieser beiden Teile eine Nachbehandlung erforderlich ist.

Vorzugsweise werden die Abwicklung des Tragarms und die Abwicklung des Montageteils aus demselben Material ausgestanzt. Durch die Vermeidung unterschiedlicher Rohmaterialien wird die Herstellung weiter vereinfacht. Beim Ausstanzen der Abwicklungen des Tragarms und des Montageteils werden vorzugsweise auch die Montageöffnungen ausgestanzt und die Halteelemente vorgesehen.

Ferner können Einformungen, wie Rippen oder Sicken vorgesehen werden, durch die die Festigkeit des Montageteils und/oder des Tragarms signifikant erhöht wird. Auf diese Weise kann darauf verzichtet werden, stärker dimensionierte Materialien für das Montageteil zu verwenden. Grundsätzlich ist jedoch auch möglich, unterschiedliche Materialien zu verwenden.

Damit der Tragarm und das Montageteil ineinander verschoben und vorteilhaft miteinander verbunden werden können, wird das dem Montageteil zugewandte Ende des Tragarms zwischen dem ersten Seitenstück und dem Mittelstück sowie zwischen dem zweiten Seitenstück und dem Mittelstück vorzugsweise je mit einem Einschnitt versehen, in den das erste bzw. zweite Seitenteil des Montageteils eingeführt wird. Die Seitenteile des Montageteils werden dadurch in den Tragarm hinein verschoben, so dass die Fusselemente des Montageteils und die Seitenstücke des Tragarms einander überlappen.

Vorzugsweise werden die Einschnitte derart dimensioniert, dass das Mittelstück des Tragarms bis zum Mittelteil des Montageteils hin verschoben werden kann.

In einer vorzugsweisen Ausgestaltung werden die Endstücke der Seitenstücke, die das Mittelstück überragen, an dem dem Montageteil zugewandten Ende des Tragarms gegeneinander abgewinkelt, bis sie an der dem Tragarm abgewandten Seite des Mittelteils des Montageteils anliegen. Auf diese Weise wird das Montageteil durch den Tragarm teilweise umfasst und gehalten. Die Endstücke der Seitenstücke des Tragarms werden in der Folge vorzugsweise mit dem Mittelteil des Montageteils verbunden. Dabei kann wiederum eine der oben beschriebenen Verbindungsmethoden, beispielsweise Toxen, angewendet werden. In einer vorzugsweisen Ausgestaltung ist der Tragarm derart geformt, dass die Fusselemente des Montageteils in Ausformungen der Seitenstücke des Tragarms formschlüssig aufgenommen werden. Ferner wird vorzugsweise vorgesehen, dass zumindest die Endstücke der Seitenstücke des Tragarms in Ausformungen des Montageteils aufgenommen werden können. Auf diese Weise resultiert eine praktisch formschlüssige, stabile Verbindung zwischen dem Tragarm und dem Montageteil.

Die genannten Einformungen oder weitere vorzugsweise vorgesehene Einformungen oder Ausformungen, insbesondere in den Seitenstücken des Tragarms und in den Fusselementen des Montageteils, führen zu einer deutlichen Erhöhung der Tragkraft des Auslegers. Beispielsweise sind Einformungen vorgesehen, welche es erlauben, die Fusselemente der Montageteils und die Seitenstücke des Tragarms in der Art von Schienen ineinander zu verschieben.

Ganz besonders vorteilhaft bei den erfindungsgemässen Ausleger ist ferner, dass das Montageteil und der Tragarm gestapelt und ineinander verschoben werden können, falls die Seitenteile bzw. Seitenstücke entsprechend geneigt sind. Ferner können die Montageteile und die Tragarme separat verpackt und geliefert werden, wodurch bei der Lagerung und beim Transport wesentliche Vorteile resultieren.

Ferner ist von Vorteil, dass in einer bevorzugten Ausgestaltung des Auslegers das Montageteil zuerst an einer Stütze montiert werden kann, wonach der Tragarm zu einem späteren Zeitpunkt mit dem Montageteil verbunden und wieder gelöst werden kann. Dies ist insbesondere auch bei nach Installationen besonders vorteilhaft, wenn ein Durchgang für einen Kabelkanal geschaffen werden soll, der neu zu montieren ist oder entfernt werden soll.

Nachfolgend wird die Erfindung anhand von Zeichnungen näher erläutert. Dabei zeigt:
- Fig. 1: einen aus der EP 1 155 638 A1 bekannter Ausleger 1000, der ein Montageteil 1012 in der Form einer Flanschplatte aufweist, welche mit einem Endstück eines Tragarms 1011 verschweisst ist, auf dem ein Kabelkanal 8 mit darin vorgesehenen Kabeln 9 abgelegt ist;
- Fig. 2: den Ausleger 1000 von Figur 1, von der Frontseite gesehen;
- Fig. 3: den Ausleger 1000 von Figur 1, der an einer Stütze 2 befestigt wird;
- Fig. 4a: das Montageteil 12 eines erfindungsgemässen Auslegers 1;
- Fig. 4b: den Tragarm eines erfindungsgemässen Auslegers 1;
- Fig. 5a: einen erfindungsgemässen Ausleger 1 mit einem Tragarm 11 gemäss Figur 4b und einem Montageteil 12 gemäss Figur 4a, von vorn und von oben gesehen;
- Fig. 5b: den erfindungsgemässen Ausleger 1 von Figur 5a, von hinten und von unten gesehen;
- Fig. 6: das Montageteil 12 von Figur 4a mit daran vorgesehenen Halteelementen 123;
- Fig. 7a, 7b: einen erfindungsgemässen Ausleger 1 mit einem Montageteil 12 gemäss Figur 6 und einem Tragarm 11 gemäss Figur 4b;
- Fig. 8: das Montageteil 12 von Figur 4a mit Halteelementen 1230, die in Form von Ausnehmungen in den Seitenteilen 122A, 122B vorgesehen sind;
- Fig. 8a: das Montageteil 12 von Figur 8 mit dem Tragarm 11, dessen Mittelteil 111 in die Ausnehmungen 1230 in den Seitenteilen 122A, 122B eingreift; und
- Fig. 8b: das Montageteil 12 mit dem Tragarm 11 von Figur 8 in einer vorzugsweisen Ausgestaltung, in der L-förmige Ausnehmungen 1230 in den Seitenteilen 122A, 122B vorgesehen sind , in die ein L- förmiges Endstück 1111 des Mittelteils 111 des Tragarms 11 eingreifen kann.

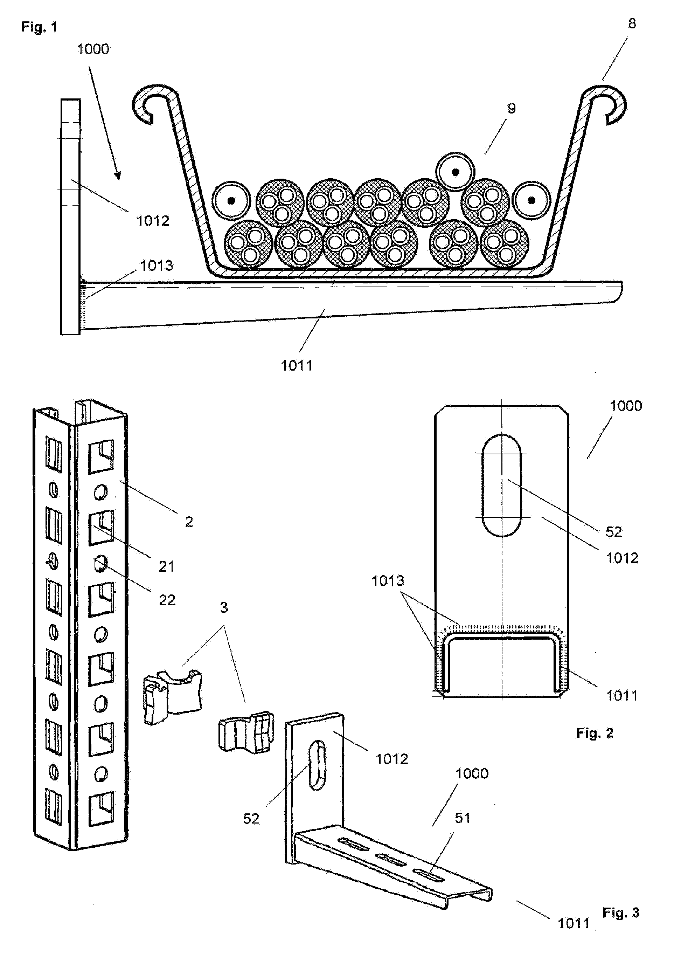

Die Figuren 1, 2 und 3 zeigen einen aus der EP 1 155 638 A1 bekannten Ausleger 1000, der ein Montageteil 1012 in der Form einer Flanschplatte aufweist, welche mit einem Endstück eines Tragarms 1011 verschweisst ist. Die Schweissnaht 1013, welche den Tragarm 1011 an der Oberseite umläuft, ist in den Figuren 1 und 2 ersichtlich.

In Figur 1 ist ferner eine typische Belastung eines solchen Auslegers 1000 mit einem Kabelkanal 8 gezeigt, in dem Kabel 9 geführt sind. Oft werden auch schwere Stromschienen und Rohrleitungen auf Auslegern dieser Art abgelegt. Die relativ dünne Schweissnaht 1013 ist daher oft erheblichen Belastungen ausgesetzt und ist mit äusserster Sorgfalt anzubringen und gegebenenfalls zu prüfen, und die eingangs beschriebenen Mängel zu vermeiden. Es wurde bereits erwähnt, dass nach dem Schweissvorgang eine Nachbehandlung im Zinkbad erforderlich ist, um Oxidationsschäden an diesen kritischen Stellen vorzubeugen.

Aus den Figuren 1 und 2 geht ferner hervor, dass der Tragarm 1011 und das Montageteil 1012 unterschiedliche Dicken aufweisen und somit aus unterschiedlichen Materialien gefertigt werden müssen. Die gesonderte Fertigung des Tragarms 1011 und des Montageteils 1012 sowie der Schweissvorgang zur Verbindung der genannten Teile 1011, 1012 erfordern daher einen hohen Aufwand.

In Figur 3 ist ferner eine Stütze 2 mit Montageöffnungen 21, 22 gezeigt, an der das Montageteil 1012 des Auslegers 1000 mittels Verbindungselementen 3 befestigt wird, wie dies in der EP 1 155 638 A1 beschrieben ist.

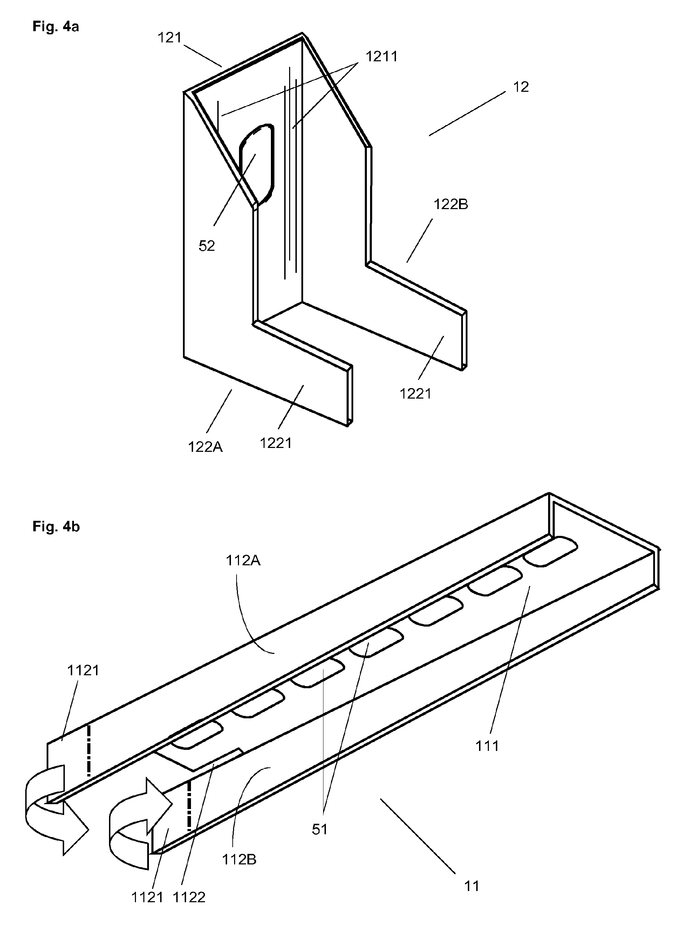

Figur 4a zeigt das Montageteil 12 eines erfindungsgemässen Auslegers 1 in einer vorzugsweisen Ausgestaltung. Das Montageteil 12 besteht aus einem mit einer Montageöffnung 52 versehene Mittelteil 121, welches an jeder Seite ein flügelartiges Seitenteil 122A, 122B aufweist. Die Seitenteile 122A, 122B, die senkrecht auf dem Mittelteil 121 stehen und beide in dieselbe Richtung gegen den Tragarm 11 gerichtet sind, weisen je ein Fusselement 1221 auf, welches ebenfalls senkrecht zum Mittelteil 121 ausgerichtet ist. Das Montageteil 12 kann aus einem Blechstück, vorzugsweise einem Sendzimirverzinkten Blechstück, ausgestanzt und durch die Abkantung der Seitenteile 122A, 122B in einfacher Weise geformt werden.

In Figur 4a ist ferner gezeigt, dass das Mittelteil 121 des Montageteils 12 mit Einformungen 1211 versehen wurde, durch die eine Versteifung des Mittelteils 121 realisiert wird. Auf diese Weise kann auf die Verwendung von dickerem Blech verzichtet werden, welches ansonsten für das stark belastete Mittelteil 121 erforderlich wäre.

Figur 4b zeigt den Tragarm 11 eines erfindungsgemässen Auslegers 1 in einer vorzugsweisen Ausgestaltung. Der Tragarm 11 besteht aus einem mit Montageöffnungen 51 versehenen Mittelstück 111, an dessen Seiten je ein Seitenstück 112A, 112B vorgesehen ist, durch die ein nach unten geöffnetes U-Profil gebildet wird. Die Seitenstücke 112A, 112B, die senkrecht auf dem Mittelstück stehen und nach unten abgekantet sind, weisen an dem mit dem Montageteil 12 zu verbindenden Ende je einen Endstück 1121 auf, welches das Mittelstück 111 um einige Zentimeter überragt. Einige Millimeter hinter der Stirnseite des Mittelstücks 111 werden die beiden Endstücke 1121 um 90° gegeneinander gebogen. Dieser Biegevorgang kann vor oder nach der Verbindung des Tragarms 11 mit dem Montageteil 12 erfolgen, falls die Einschnitte 1122 genügend tief sind. Die Abwicklung des Tragarms 11 kann aus demselben Blech ausgestanzt werden, ist dem auch das Montageteil 12 ausgestanzt wird. Auf diese Weise resultieren ein minimaler Aufwand und minimale Kosten.

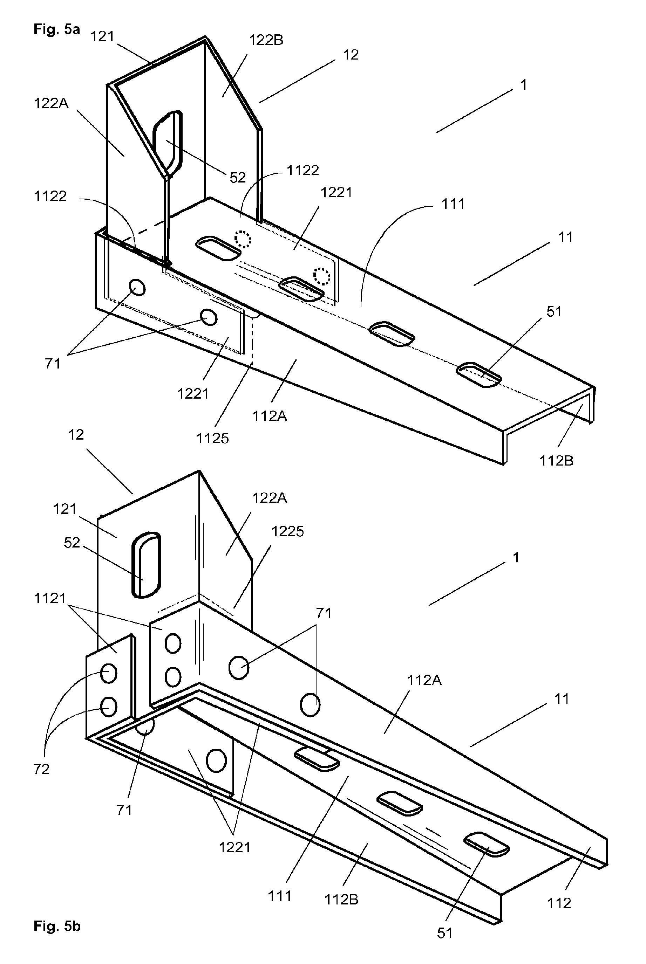

In den Figuren 5a und 5b ist der Ausleger 1 gezeigt, welcher nach dem Zusammenfügen des Montageteils 12 von Figur 4a und des Tragarms 11 von Figur 4b resultiert.

Figur 5a zeigt den erfindungsgemässen Ausleger 1 von vorn und von oben. Figur 5b zeigt den erfindungsgemässen Ausleger 1 von hinten und von unten.

Es ist gezeigt, dass der Tragarm 11 und das Montageteil 12 ineinander verschoben wurden, wobei die Seitenteile 122 von den im Tragarm 11 vorgesehenen Einschnitten 1122 aufgenommen wurden. Gleichzeitig wurden die Fusselemente 1221 unter das Mittelstück 111 des Tragarms 11 geschoben, wo sie parallel an den Innenseiten der Seitenstücke 112A, 112B des Tragarms 11 anliegen und den Tragarm 11 stützen.

Zur gegenseitigen Fixierung des Tragarms 11 und des Montageteils 12 ist jedes der Fusselemente 1221 und das zugehörige Seitenstück 112A bzw. 112B des Tragarms 11 durch je zwei Tox-Verbindungen 71 miteinander verbunden. Damit die vom Tragarm 11 einwirkende Last nicht von den Tox-Verbindungen 71 aufgenommen werden muss, besteht vorzugsweise eine formschlüssige Verbindung zwischen den Seitenstücken 112A bzw. 112B und den Fusselementen 1221. Zusätzlich oder alternativ ist vorgesehen, dass die Fusselemente 1221 direkt am Mittelstück 111 des Tragarms 11 anliegen und dieses stützen. Dazu kann vorgesehen sein, das die oberen Enden der Fusselemente 1221 leicht gegeneinander gebogen sind, so dass sie den Tragarm 11 federelastisch halten. In Figur 5a ist ferner schematisch gezeigt, dass die Seitenstücke 112A, 112B mit einer Ausformung 1125 versehen sind, in denen die Fusselemente 1221 formschlüssig aufgenommen sind.

In Figur 5b ist gezeigt, dass die Endstücken 1121 der Seitenstücke 112A, 112B des Tragarms 11 hinter dem Montageteil 12 gegeneinander abgewinkelt und durch je zwei Tox-Verbindungen 72 mit dem Mittelteil 121 des Montageteils 12 verbunden sind. Schematisch gezeigt ist, dass auch das Montageteil 12 mit einer Einformung 1225 versehen werden kann, die der Aufnahme der Endstücke 1121 oder weiteren Teilen der Seitenstücke 112A, 112B dient. Durch die Ausformungen 1125 und Einformungen 1225 wird bewirkt, dass der Tragarm 11 und das Montageteil 12 formschlüssig ineinander eingreifen und durch die Tox-Verbindungen 71, 72 lediglich fixiert werden. Die Ausformungen 1125 und Einformungen 1225 bewirken ferner eine Versteifung des Auslegers 1 und dadurch eine wesentliche Erhöhung der Tragfähigkeit.

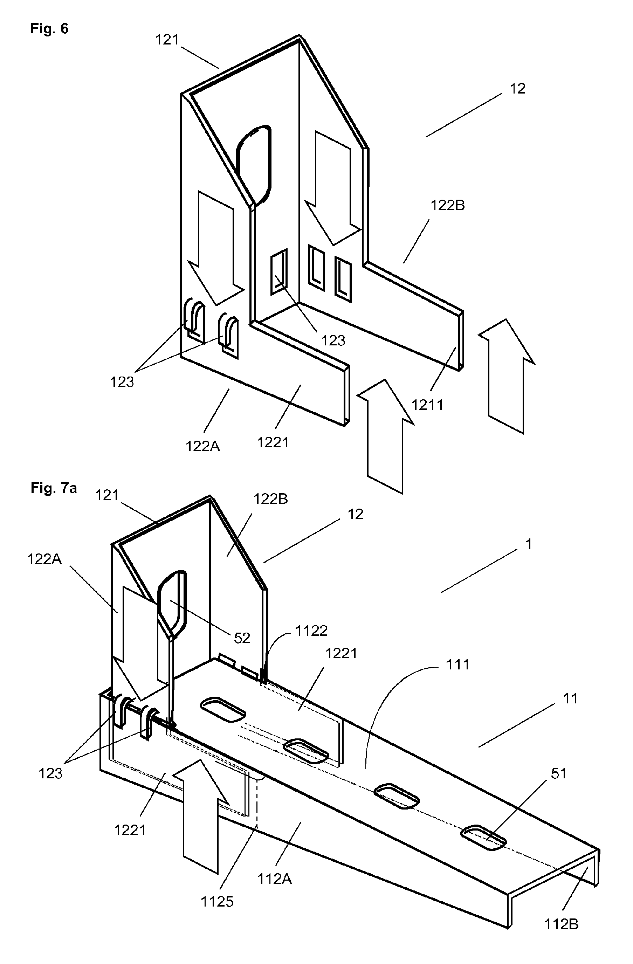

Figur 6 zeigt das Montageteil 12 von Figur 4a mit daran vorgesehenen Halteelementen 123, welche dem Halten des Tragarms 11 dienen. Die Halteelemente 123 sind aus dem beiden Seitenteile 122A, 122B und dem Mittelteil 121 des Montageteils 12 ausgeschnitten und nach aussen gedrückt, so dass sie zungenförmig gegen die Seitenstücke 112A, 122B, 1121 des Tragarms 11 gerichtet sind und diese aufnehmen und halten können, sobald eine Last auf den Tragarm 11 einwirkt. Halteelemente 123 können am Mittelteil 121 und/oder an den Seitenteilen 122A, 122B des Montageteils 12 vorgesehen werden.

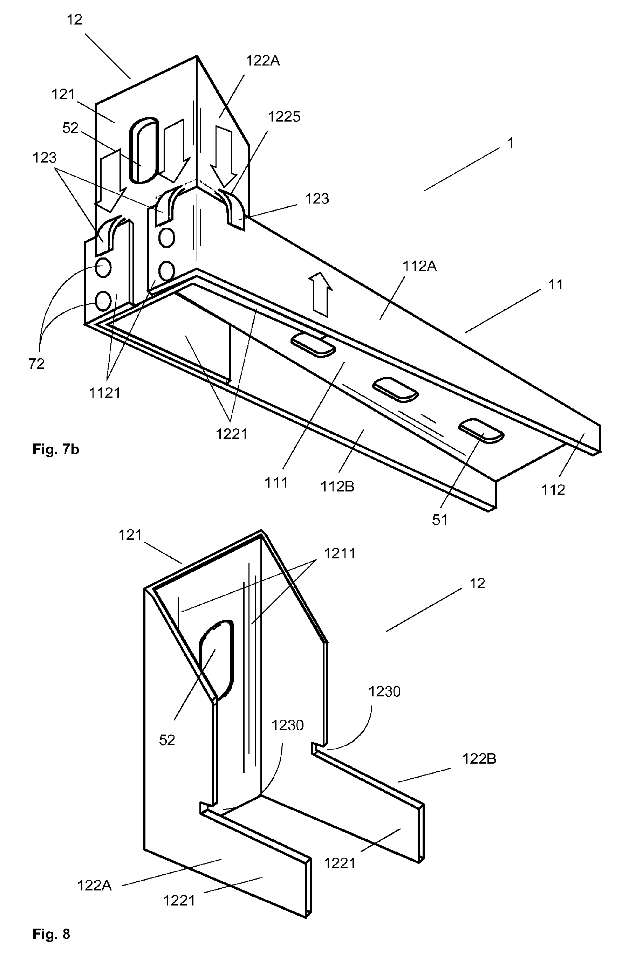

Die Figuren 7a und 7b zeigen den erfindungsgemässen Ausleger 1 mit einem Montageteil 12 gemäss Figur 6 und einem Tragarm 11 gemäss Figur 4b. Es ist gezeigt, dass der Tragarm 11 vorne durch die Fusselemente 1221 nach oben gedrückt und hinten durch die Halteelemente 123, die einen Anschlag bilden, in Position gehalten wird.

In Figur 7b ist ferner gezeigt, dass die Endstücke 1121 der Seitenstücke 112 durch vorzugsweise vorgesehene Tox-Verbindungen 72 mit dem Mittelteil 121 des Montageteils 12 verbunden sind.

Ausgehend von der erfindungsgemässen Lösung sind zahlreiche verschiedene Varianten realisierbar. Der Tragarm 11 und das Montageteil 12 bzw. die entsprechenden Abwicklungen, die aus dem verzinkten Blech oder aus einer rostfreien Blech ausgestanzt werden, können beliebig geformt und an die jeweiligen Bedürfnisse und Gegebenheiten angepasst werden. Ferner kann verschiedenartiges Ausgangsmaterial, beispielsweise auch rostfreier Stahl, verarbeitet werden. Weiterhin sind die Dimensionen des Montageteils 12 und des Tragarms 11 unter Berücksichtigung der zu tragenden Last 8, 9 beliebig wählbar.

Ferner können die Verbindungen 71, 72 bedarfsweise in einer gewünschten Anzahl vorgesehen werden. Dabei ist es möglich, verschiedene Verbindungsarten miteinander zu kombinieren, wie dies in Figur 7b gezeigt ist.

Weiterhin sind beliebige bekannte Möglichkeiten zur Verbindung des Montageteils 12 mit einer Deckenstütze 2 oder mit einem beliebigen anderen Gegenstand realisierbar. Das Montageteil 12 kann beispielsweise mit einer Wand verschraubt werden. Dabei wird die Form des Montageteils 12 vorzugsweise an den Montagekörper angepasst. Nicht nur die Länge der Fusselemente 1221, sondern auch die Höhe des Montageteils 12 kann daher durch den Anwender festgelegt werden.

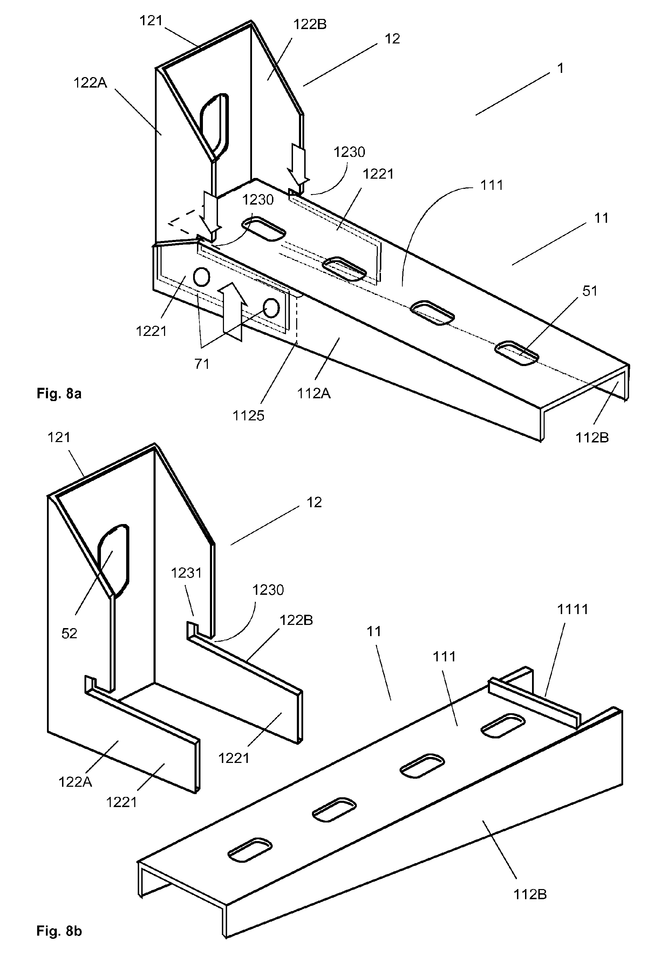

Figur 8 zeigt das Montageteil 12 von Figur 4a mit Halteelementen 1230, die in Form von Ausnehmungen in den Seitenteilen 122A, 122B vorgesehen sind. Diese Ausnehmungen 1230, die ohne Mehraufwand gleichzeitig mit dem Ausstanzen des Montageteils 12 aus einem Blech gefertigt werden können, dienen der Aufnahme eines Endstücks 1111 des Mittelteils 111 des Tragarms 11. nach der Aufnahme des Endstücks 1111 kann der Tragarm 11 unter Last nicht mehr nach unten kippen. Figur 8a zeigt das Montageteil 12 von Figur 8 mit dem Tragarm 11, dessen Mittelteil 111 in die Ausnehmungen 1230 in den Seitenteilen 122A, 122B eingreift.

Damit diese Verbindung zwischen dem Tragarm 11 und dem Montageteil 12 erhalten bleibt, können die bereits oben beschriebenen Maßnahmen angewendet werden. Dies kann durch mehrere Maßnahmen sichergestellt werden. Beispielsweise werden Tox-Verbindungen vorgesehen, welche die Seitenteile 122 des Montageteils 12 und die Seitenstücke 112 des Tragarms 11 miteinander verbinden. Weiterhin können die Endstücke 1121 der Seitenstücke 112 des Tragarms 11 hinter dem Mittelteil 121 des Montageteils 12 gegeneinander gebogen werden, wie dies in Figur 5a gezeigt ist. In Figur 8b ist gezeigt, dass vorzugsweise L-förmige Ausnehmungen 1230 in den Seitenteilen 122A, 122B vorgesehen werden, in die ein dazu korrespondierendes, vorzugsweise L-förmiges Endstück 1111 des Mittelteils 111 des Tragarms 11 eingreifen kann. Auf diese Weise wird das Endstück 1111 und somit der Tragarm 11 zuverlässig gehalten. Die genannten Verwendungsmöglichkeiten können auch in Kombination vorgesehen werden.

### Literaturverzeichnis

[1] EP 1 155 638 A1
[2] US 2,933,196
[3] EP 1 475 871 A1

## Patentansprüche

1. Ausleger (1) mit einem Tragarm (11), der ein Mittelstück (111) und ein erstes sowie ein zweites in dieselbe Richtung senkrecht zum Mittelstück (111) geneigtes Seitenstück (112) aufweist, die ein U-Profil bilden, welches mit einem Montageteil (12) verbunden oder lösbar verbindbar ist, das ein an einer vertikal ausgerichteten Stütze (2) montierbares Mittelteil (121) und ein erstes sowie ein zweites senkrecht dazu gegen den Tragarm (11) gerichtetes Seitenteil (122A, 122B) aufweist, **dadurch gekennzeichnet, dass** jedes Seitenteil (122A, 122B) ein Fusselement (1221) aufweist, welches sich zumindest über einen Teil der Länge des Tragarms (11) erstreckt und an der Unterseite des Mittelstücks (111) und am zugehörigen Seitenstück (112) des Tragarms (11) anliegt und dass Teile des Tragarms (11) und des Montageteils (12) formschlüssig miteinander verbunden sind, so dass der Tragarm (11) auf den Fusselementen (1221) gehalten ist.

2. Ausleger (1) nach Anspruch 1, **dadurch gekennzeichnet, dass** am Mittelteil (121) und/oder an den Seitenteilen (122A, 122B) des Montageteils (12) Halteelemente (123) angeformt oder ausgeschnitten und gegen das zugehörige Seitenstück (112) des Tragarms (11) gerichtet sind.

3. Ausleger (1) nach Anspruch 1 oder 2, **dadurch gekennzeichnet, dass** an den Seitenteilen (122A, 122B) des Montageteils (12) Halteelemente (1230) in Form von Ausnehmungen vorgesehen sind, in die das Mittelteil (111) des Tragarms (11) eingreift.

4. Ausleger (1) nach Anspruch 3, **dadurch gekennzeichnet, dass** die aus dem Montageteil (12) teilweise ausgeschnittenen Halteelemente (123) zungenförmig ausgestaltet und in einem derart gewählten Abstand vom Mittelteil (121) oder vom zugehörigen Seitenteil (122A, 122B) gegen den Tragarm (11) gerichtet sind, dass dessen Seitenstücke (112A, 112B, 1221) zwischen das Mittelteil (121) oder das zugehörige Seitenteil (122A, 122B) und die entsprechenden Halteelemente (123) einführbar sind.

5. Ausleger (1) nach einem der Ansprüche 1-4, **dadurch gekennzeichnet, dass** das dem Montageteil (12) zugewandte Ende des Tragarms (11) zwischen dem ersten Seitenstück (112A) und dem Mittelstück (111) sowie zwischen dem zweiten Seitenstück (112B) und dem Mittelstück (111) je einen Einschnitt (1122) aufweist, in die das erste bzw. zweite Seitenteil (122A; 122B) des Montageteils (12) eingeführt sind.

6. Ausleger (1) nach Anspruch 5, **dadurch gekennzeichnet, dass** die Einschnitte (1122) derart dimensioniert sind, dass das Mittelstück (111) des Tragarms (11) am Mittelteil (121) des Montageteils (12) anliegt.

7. Ausleger (1) nach einem der Ansprüche 1 - 6, **dadurch gekennzeichnet, dass** die Endstücke (1121) der Seitenstücke (112) an dem dem Montageteil (12) zugewandten Ende des Tragarms (11) gegeneinander abgewinkelt sind und an der dem Tragarm (11) abgewandten Seite des Mittelteils (121) des Montageteils (12) anliegen und durch weitere Verbindungen (72) mit diesem verbunden sind.

8. Ausleger (1) nach einem der Ansprüche 1 - 7, **dadurch gekennzeichnet, dass** der Tragarm (11) und/oder das Montageteil (12) mit Montageöffnungen (5, 6) versehen sind und vorzugsweise aus dem gleichen Material gefertigt sind.

9. Ausleger (1) nach einem der Ansprüche 1 - 8, **dadurch gekennzeichnet, dass** der Tragarm (11) und/oder das Montageteil (12) mit wenigstens einer Schutzschicht, wie einer Zinkschicht versehen sind.

10. Ausleger (1) nach einem der Ansprüche 1 - 9, **dadurch gekennzeichnet, dass** der Tragarm (11) und/oder das Montageteil (12) derart geformt sind, dass die Fusselemente (1221) des Montageteils (12) in Ausformungen (1125) der Seitenstücke (112) des Tragarms (11) und/oder dass zumindest die Endstücke (1121) der Seitenstücke (112) des Tragarms (11) in Ausformungen (1225) des Montageteils (12) eingepasst sind.

11. Ausleger (1) nach einem der Ansprüche 1 - 10, **dadurch gekennzeichnet, dass** der Tragarm (11) und/oder das Montageteil (12) mit Einformungen (1125; 1225) versehen sind, welche als Verstärkungselemente dienen.

12. Ausleger (1) nach einem der Ansprüche 1-11, **dadurch gekennzeichnet, dass** die Seitenteile (122A, 122B) und/oder das Mittelteil (121) des Montageteils (12) durch wenigstens eine mechanische Verbindung (71, 72), wie eine Tox-Verbindung, eine Schraubverbindung, eine Nietverbindung mit den Seitenstücken (112A, 112B) des Tragarms (11) und/oder mit den daran vorgesehenen Endstücken (1121) verbunden ist.

13. Ausleger (1) nach Anspruch 12, **dadurch gekennzeichnet, dass** jedes der Fusselemente (1221) des Montageteils (12) durch wenigstens eine mechanische Verbindung (71) mit dem daran anliegenden Seitenstück (112) des Tragarms (11) verbunden ist und/oder das Mittelteil (121) des Montageteils (12) durch wenigstens eine mechanische Verbindung (72) mit den Endstücken (1121) der Seitenstücke (112A, 112B) verbunden ist.
